# EUROPÄISCHE PATENTSCHRIFT

(11) **EP 0 943 230 B1**
(45) Veröffentlichungstag und Bekanntmachung des Hinweises auf die Patenterteilung: **17.04.2002**
(21) Anmeldenummer: 99100234.6
(22) Anmeldetag: 08.01.1999
(51) Int. Cl.: A01D 57/22, A01D 45/02

(54) **Fördereinrichtung für Erntemaschinen**
Conveying device for harvesting machines
Dispositif convoyeur pour machines de récolte

(30) Priorität: 17.03.1998 DE 19811449
(43) Veröffentlichungstag der Anmeldung: 22.09.1999
(73) Patentinhaber: CLAAS Selbstfahrende Erntemaschinen GmbH, 33428 Harsewinkel (DE)
(72) Erfinder: Uhlending, Hubert, 48249 Dülmen (DE); Buhne, Hubert, 48324 Sendenhorst (DE); Arnold, Andreas, 33619 Bielefeld (DE); Gausmann, Ludger, 49170 Hagen a.TW. (DE); Amsbeck, Uwe, 33428 Harsewinkel (DE)

(56) Entgegenhaltungen:
- EP-A- 0 818 136
- GB-A- 709 507
- GB-A- 1 438 902
- US-A- 1 908 966
- US-A- 2 634 569

## Beschreibung

Die Erfindung betrifft eine Fördereinrichtung in einer Erntemaschine zum Ernten von insbesondere stengelaufweisenden Erntegütern wie Holz, Mais, Zuckerrohr, Getreide, Gras, Schilf und Hanf. Die folgende Erläuterung beschreibt den Erfindungsgegenstand als Anwendungsbeispiel in einem Feldhäcksler dessen Aufnahmeeinrichtungen für das Ernten von schnellwüchsigem Gehölz ausgelegt sind. Diese Einrichtung ist mit wenigstens zwei gegensinnig rotierend antreibbaren Kreismessern zum Abschneiden des Erntegutes und eine entsprechende Stückzahl von oberhalb der Kreismesser angeordneten, rotierend antreibbaren zylindrischen Gehäusen, die wenigstens jeweils ein Aufnahmeelement zur Festlegung von Förderzinken aufweisen, ausgerüstet.

Mit derartig ausgerüsteten Feldhäckslern werden schnellwüchsige Gehölze wie z.B. Salix, Weiden und dergleichen geerntet und gehäckselt. Die an den rotierend antreibbaren Gehäusen festgelegten Zinken sind notwendig, daß das beispielsweise 3 bis 5 m hohe Erntegut mit dem geschnittenen Ende vorauslaufend der Förderstrecke des Häckslers zugeführt wird. Dazu werden die rotierend antreibbaren Gehäuse normalerweise in gleicher Drehrichtung wie die darunter liegenden Kreismesser angetrieben. Die Drehrichtungen sind dabei so gewählt, daß das abgeschnittene Erntegut durch den Bereich zwischen den beiden Zinkenrotoren hindurchgeführt wird.

Bei einem aus der DE 196 27 872 A1 bekannten Feldhäcksler sind die Zinken mit einem Ringflansch verschraubt, der an einem rotieren antreibbaren Gehäuse festgelegt ist. Der Antrieb dieses Gehäuses erfolgt durch einen Kettentrieb, welcher von einem Ölmotor angetrieben wird. Das Gehäuse und die Zinken sind vom vorderen Bereich des Feldhäckslers gegenüber der Horizontalen geneigt. Die darunter angeordneten Kreismesser sind ebenfalls gegen die Ho rizontale geneigt, wobei der gegenüber der Horizontalen eingeschlossene Winkel kleiner ist.

Der Abstand zwischen den Zinken und den Kreismessern ist relativ groß, so daß die abgeschnittenen Enden der Stengel angehoben und in die Förderstrecke transportiert werden.

Damit die Zinken gegenüber dem festen Ringflansch federn können, sind sie an der Befestigungsseite mehrfach nach Art einer Schraubenfeder gewunden. Dadurch ist eine gewisse Nachgiebigkeit vorhanden, die jedoch nicht ausreicht, um beispielsweise bei einer gegenüber der normalen Belastung erhöhten Belastung einen Bruch auszuschließen. Dies kommt beispielsweise vor, wenn es zu einer Anhäufung von Erntegut kommt. Der Antrieb für die Zinken ist reversierbar, damit in solchen Fällen die Drehrichtung umgekehrt werden kann, um das Erntegut entgegen der normalen Flußrichtung zu transportieren. Nach dem Bruch eines Zinkens ist es notwendig, diesen auszuwechseln, so daß der Häcksler vorübergehend stillgesetzt werden muß. Trotz der federnden Anordnung der Zinken ist die Standzeit relativ gering.

Der Erfindung liegt die Aufgabe zugrunde, die Zinken an dem rotierend antreibbaren Gehäuse in einer kompakten Bauweise so festzulegen, daß bei ausreichender Federung die Bruchgefahr wesentlich herabgesetzt wird, so daß die Standzeit der Zinken wesentlich erhöht wird. Die gestellte Aufgabe wird gelöst, indem jeder Zinken an seinem inneren, dem zylindrischen Gehäuse zugewandten Ende eine Lagerplatte trägt, die auf einen am zylindrischen Gehäuse achsparallelen und gegenüber diesen feststehenden Lagerbolzen drehbar gelagert ist, daß an der Lagerplatte wenigstens ein Wälzkörper oder ein Gleiter angeordnet ist, der sich auf einer durch einen Kraftspeicher belasteten Steuerscheibe abstützt, die gegenüber dem Lagerbolzen unverdrehbar und ausschließlich in axialer Richtung verfahrbar ist, so daß bei einer Drehung des Zinkens die Steuerscheibe entgegen der Wirkung des Kraftspeichers in Achsrichtung des Lagerbolzens verschiebbar ist.

Gegenüber der vorbekannten Ausführung sind die inneren Enden der Zinken nicht mehr spiralförmig gewunden sondern von der Lagerplatte gehalten. Kommt es nunmehr zu einer erhöhten Belastung eines Zinkens, kann sich dieser um die Längsachse des Lagerbolzens drehen, so daß es nicht zum Aufbau von Spannungspitzen kommt, die bislang zum Bruch führten. Durch den Kraftspeicher in Verbindung mit der Steuerscheibe wird jedoch erreicht, daß das beim Normalbetrieb auf jeden Zinken einwirkende Drehmoment ohne größere Drehung des Zinkens übertragen wird. Erst bei einem erhöhten Drehmoment erfolgt die Drehbewegung die jedoch hervorruft, daß aufgrund der Gestaltung der Steuerscheibe der Kraftspeicher gespannt wird, d.h. der Drehwinkel jedes Zinkens ist in Abhängigkeit von dem einwirkenden Drehmoment abhängig. Je größer das einwirkende Drehmoment ist, je größer ist auch der Drehwinkel und je größer ist auch die vom Kraftspeicher aufgebrachte Kraft, so daß in allen Lagen des Zinkens die einwirkenden Drehmomente abgetragen werden. Der Lagerbolzen, der Kraftspeicher und die Steuerscheibe laufen mit gleicher Drehzahl wie das zylindrische Gehäuse um führen jedoch keine Relativbewegung zu diesem aus. Erst bei einem erhöhten auf die Zinken einwirkenden Drehmoment wird die Steuerscheibe, von den Wälzkörpern oder Gleitern in Längsrichtung des Lagerbolzens bzw. in Richtung der Drehachse des zylindrischen Gehäuses verschoben.

Zur Vermeidung von die Drehbewegung der Zinken verhindernden Kippmomenten ist vorgesehen, daß an der Lagerplatte zwei um einen Winkel um 180° zueinander versetzte Wälzkörper, vorzugsweise Kurvenrollen oder Wälzlager drehbar gelagert sind, und daß die von den Wälzkörpern kontaktierte Steuerfläche der Steuerscheibe aus vier sich über einen gleichen Winkelabstand erstreckenden Schrägfläche gebildet ist. Im Normalbetriebszustand stützen sich die Wälzkörper dann an den tiefsten Stellen der Steuerscheibe ab, die um einen Winkel von 180° zueinander versetzt sind. Wirkt ein erhöhtes Drehmoment auf die Zinken ein, wälzen sich die Wälzkörper auf die ansteigenden Schrägflächen ab, da jedoch die Lagerplatte ausschließlich drehbar ist, wird die Steuerscheibe entgegen der Wirkung des Kraftspeichers verschoben, wodurch sich der Abstand zur Lagerplatte vergrößert. Die auf die Wälzkörper wirkenden Druckkräfte des Kraftspeichers sind demzufolge in allen Stellungen eines Zinkens gleich, so daß sie sich gegenseitig aufheben. Damit die Funktion gewährleistet ist, ist vorgesehen, daß die Schrägflächen, in Umlaufrichtung der Steuerscheiben gesehen, wechselweise Steigungsund Neigungsflächen mit gleichen Neigungs- und Steigungswinkeln sind. Dadurch entstehen für die Steuerfläche zwei tiefste Stellen und zwei erhöhte Stellen, die jeweils um 180° zueinander versetzt sind, wobei jedoch eine erhöhte Stelle um einen Winkel von 90° zu den beiden tiefsten Stellen steht.

Je nach Art des mit dem Feldhäcksler zu erntenden Erntegutes kann es notwendig sein, daß die auf die Zinken wirkenden Drehmomente im Normalbetrieb unterschiedlich sind. Es ist deshalb vorgesehen, daß die vom Kraftspeicher aufgebrachte Druckkraft einstellbar ist. Je nach Art des Kraftspeichers läßt sich dies auf vielfältige Weise lösen, wie noch näher erläutert wird.

In der einfachsten Bauweise könnte der Kraftspeicher eine vorgespannte Druckfeder sein. Da jedoch die aufgebrachte Druckkraft von der Anzahl der Windungen abhängt, wird eine relativ hohe Bauhöhe vorgegeben, die jedoch unerwünscht ist, da der Feldhäcksler auch bei einer erhöhten Schneedecke eingesetzt wird. Es soll ganz vermieden werden, daß Bauteile in die Schneedecke gelangen, da dadurch Schnee in die Förderstrecke des Feldhäckslers gelangt. Es ist deshalb vorgesehen, daß der jedem Zinken funktionell zugeordnete Kraftspeicher ein Paket aus Tellerfedern ist. Dadurch wird gewährleistet, daß bei Verwendung einer relativ geringen Anzahl von Tellerfedern eine hohe Druckkraft erreicht wird. Die Bauhöhe des Kraftspeichers ist dann relativ gering. Um bei einer solchen Ausführung unterschiedliche Druckkräfte zu erreichen, ist vorgesehen, daß die Einstellung der Druckkraft durch Steuerscheiben mit unterschiedlichen Neigungs- und Steigungswinkeln der Schrägflächen der Steuerfläche und/oder durch die Anzahl von Distanzringen einstellbar ist. Je größer der Neigungswinkel ist, je größer ist die Erhöhung der Druckkraft bei der Drehung eines Zinkens. Durch unterschiedliche Dikken der Steuerscheibe läßt sich das aus dem Tellerfedern gebildete Paket mehr oder weniger stark vorspannen, so daß die Druckkraft in der Normalstellung schon unterschiedlich sein kann. Dies kann jedoch auch ausschließlich durch Distanzscheiben erreicht werden, die zwischen einer stirnseitigen Tellerfeder und einer Abstützung angeordnet werden.

Eine konstruktiv einfache Ausführung ergibt sich, wenn jeder Lagerbolzen zwischen zwei parallel und im Abstand am rotierend antreibbaren Gehäuse angeordneten Ringflanschen angeordnet ist, und daß der gegenüber den Lagerplatten vorstehende Bereich des Lagerbolzens eine Aufnahme für den Kraftspeicher bildet. Dadurch wird die Anzahl der Bauteile reduziert. Sofern der Kraftspeicher eine Druckfeder oder ein Paket aus Tellerfedern ist, liegt der besagte Bereich des Lagerbolzens innerhalb des Kraftspeichers. Bei dieser Ausführung ist dann vorgesehen, daß der zwischen den Kraftspeicher und der Lagerplatte liegende Bereich des Lagerbolzens als Sitz für die Steuerscheiben derart ausgebildet ist, daß diese drehfest, jedoch in axialer Richtung verschiebbar ist. Ein derartiger Sitz läßt sich in einfachster Weise erreichen, indem die Bohrung der Steuerscheibe als Innenverzahnung gestaltet ist und der Lagerbolzen eine entsprechende Gegenverzahnung aufweist. Die Länge der Gegenverzahnung muß jedoch größer sein als die Dicke der Steuerscheibe, damit die axiale Verschiebbarkeit gewährleistet ist. Die Anordnung der Wälzkörper an der Lagerplatte läßt sich konstruktiv besonders einfach umsetzen, wenn die Wälzkörper auf quer zur Längsrichtung des Lagerbolzens stehenden Bolzen drehbar gelagert sind, die in die Lagerplatte eingesetzt sind. Die Bolzen können beispielsweise Paßschrauben mit den entsprechenden Sitzen für die Wälzlager sein. Damit die vom Kraftspeicher aufgebrachten Reibkräfte bei der Drehung eines Zinkens möglichst gering sind, ist vorgesehen, daß zur Abtragung der vom Kraftspeicher aufgebrachten Druckkraft an der dem Kraftspeicher abgewandten Seite sich die Lagerplatte an einem Axiallager abstützt.

Im folgenden soll die Erfindung an Hand eines Ausführungsbeispieles und mehrerer die darstellender Figuren erläutert werden. Dabei zeigt:
- Figur 1: den vorderen Teil eines Feldhäckslers in der Seitenansicht,
- Figur 2: eine Draufsicht auf den in der Figur 1 teilweise dargestellten Feldhäcksler,
- Figur 3: einen Schnitt längs der Linie III-III in der Figur 2,
- Figur 4: eine Einzelheit in vergrößerter Darstellung nach der Figur 3, die Lagerung eines Zinkens zeigend und
- Figur 5: einen Schnitt nach der Linie V-V in der Figur 4.

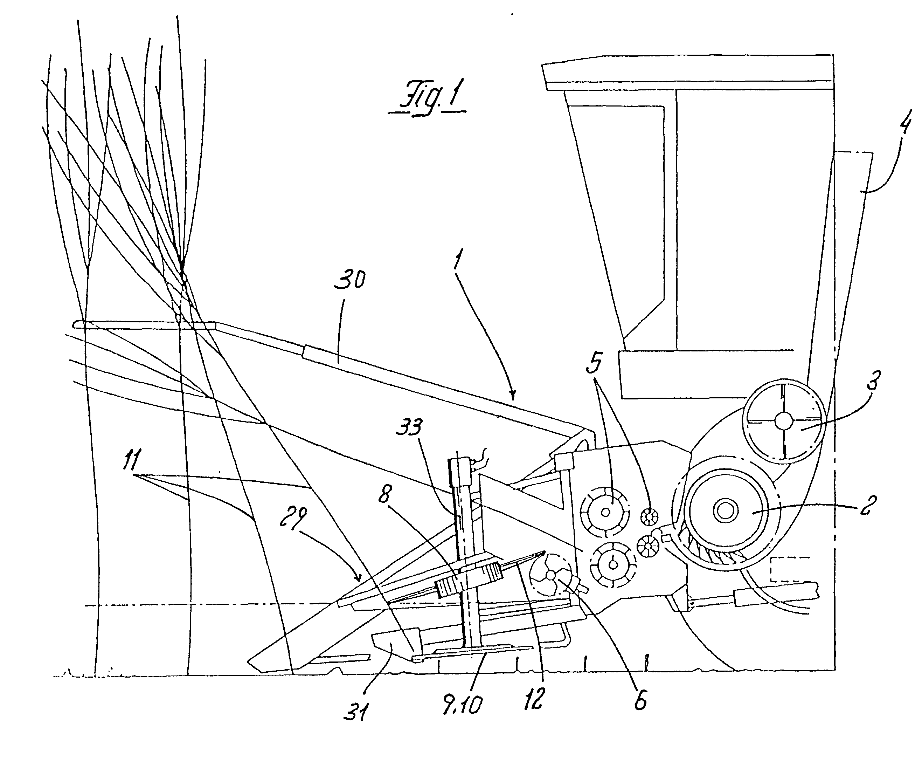

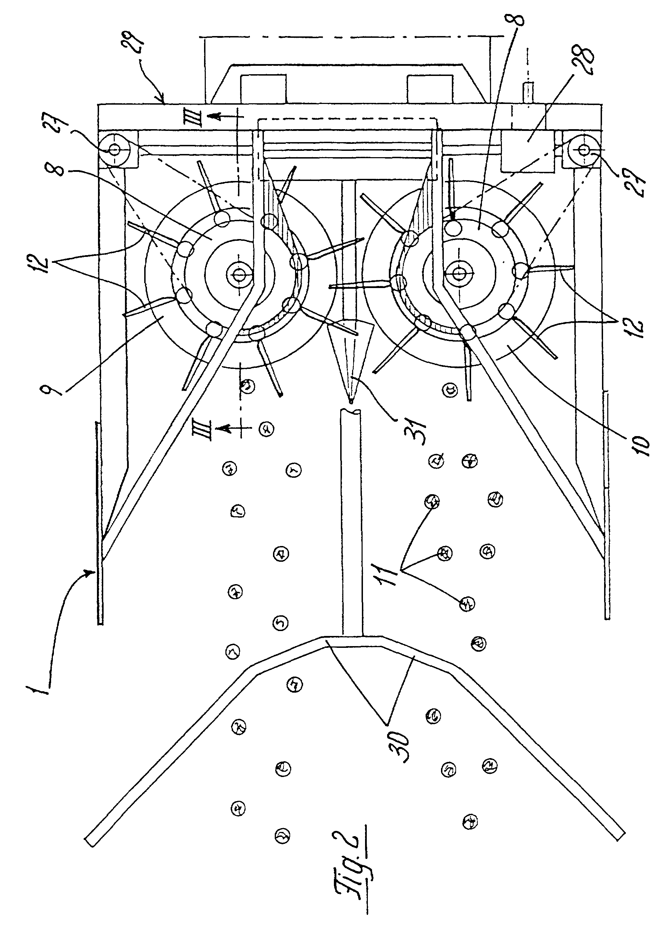

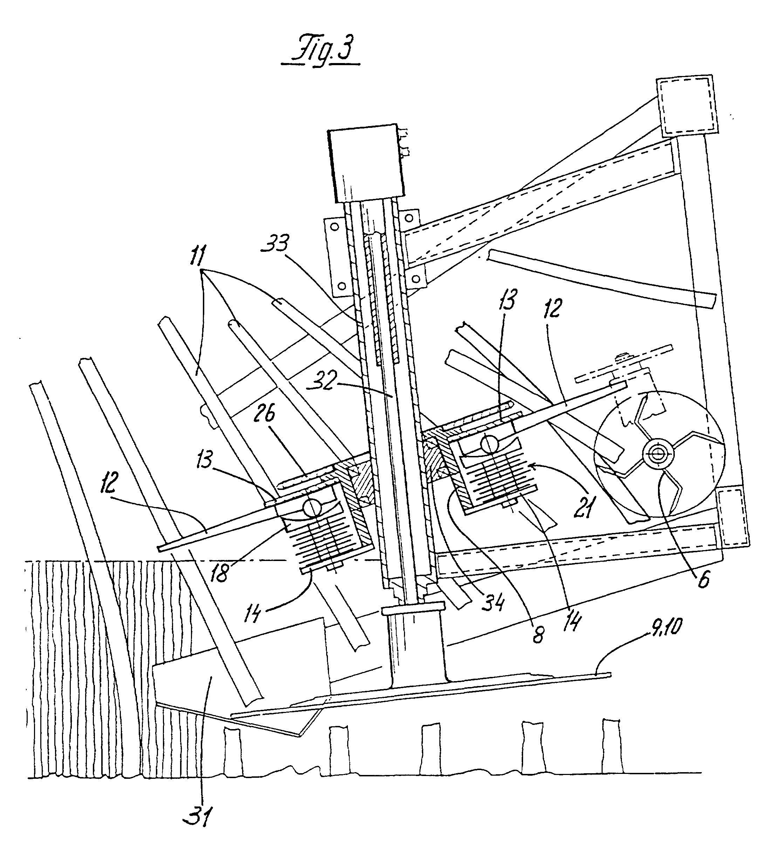

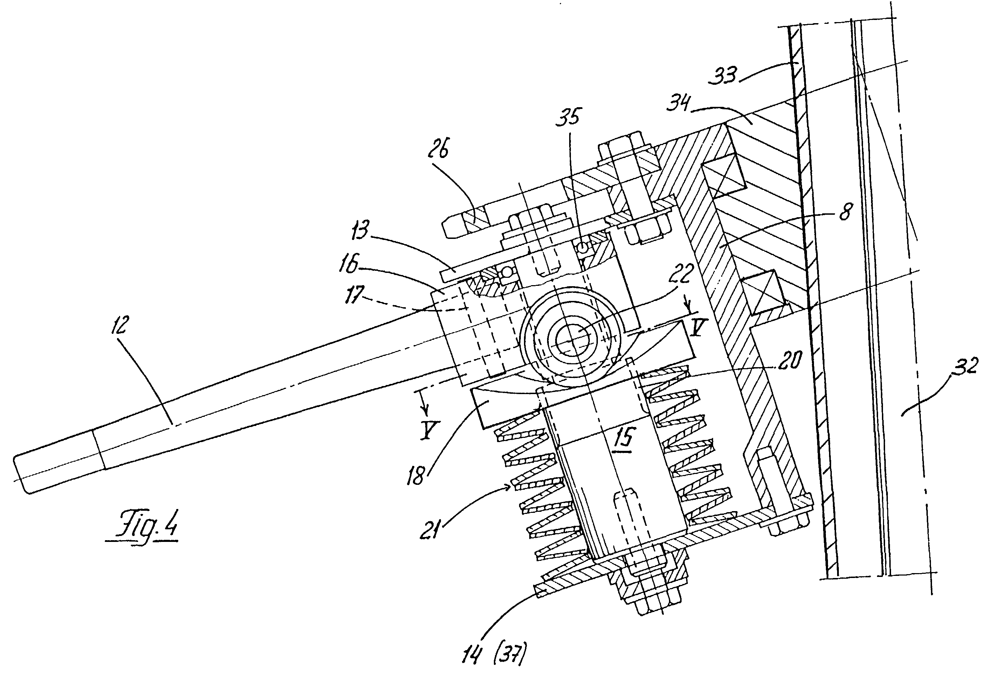

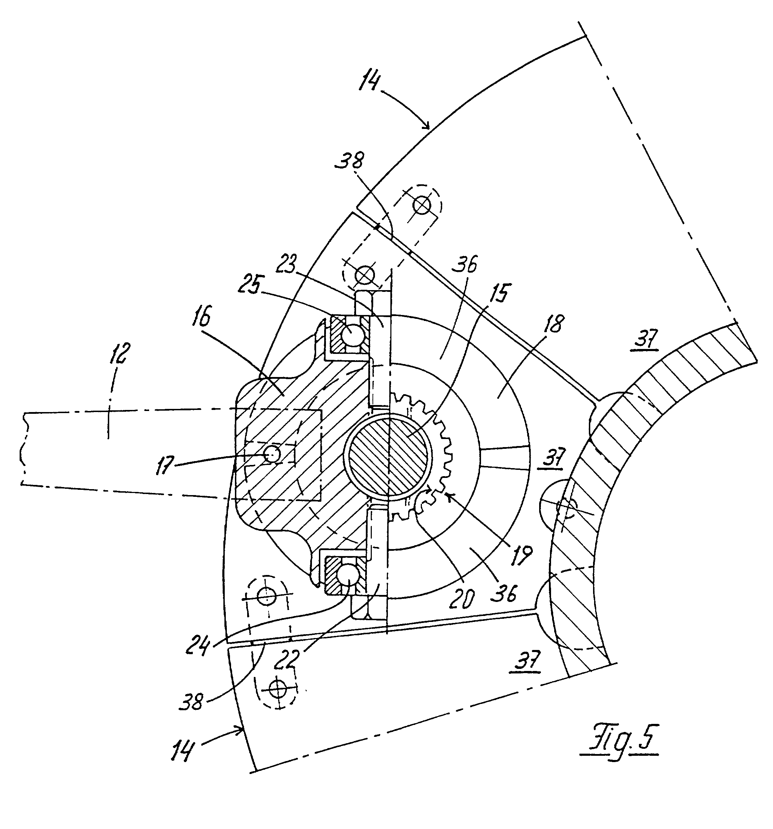

In den Figuren 1 und 2 ist der vordere Teil 1 eines selbstfahrenden Häckslers dargestellt, der mit einer Häckseltrommel 2 und einem Nachbeschleuniger 3 ausgerüstet ist, durch welchen das gehäckselte Erntegut über das Auswurfrohr 4 den Feldhäcksler verläßt, und einem Begleit- oder Anhängefahrzeug zugeführt wird. Die Häckseltrommel 2 ist eine aus Förderwalzenpaaren 5 gebildete Förderstrecke vorgeordnet. Der Förderstrecke 5 unmittelbar vorgeschaltet ist eine Förderwalze 6, die horizontal und quer zur Fahrtrichtung angeordnet ist. Diese Förderwalze 6 rotiert direkt unterhalb der Rotationsebene von mehreren Zinken 12, die in noch näher erläuterter Weise an einem rotierend antreibbaren zylindrischen Gehäuse 9, 10 drehbeweglich gelagert sind. In Erntegutflußrichtung gesehen sind vor der Förderwalze 6 zwei Kreismesser 9, 10 angeordnet, die mittels eines leicht gegen die Vertikale geneigte Welle antreibbar sind. Die Neigung gegen die Vertikale ist so gewählt, daß die Kreismesser 8, 9 zur Vorderseite des Feldhäckslers geneigt sind. Der Antrieb der Kreismesser 9, 10 erfolgt gegenläufig, so daß die abgeschnittenen Stengel von Pflanzen zur Mitte geschleudert werden. Damit die abgeschnittenen Enden vorauslaufend transportiert werden, sind oberhalb der Kreismesser 9, 10 die rotierend antreibbaren Zinken 12 an dem zylindrischen Gehäuse 8 angeordnet. Am oberen und unteren Stirnendbereich des Gehäuses 8 sind zwei parallel und im Abstand zueinander stehende Ringflansche 13, 14 angeschraubt. Zwischen den beiden Ringflanschen 13, 14 sind im dargestellten Ausführungsbeispiel acht im gleichen Winkelabstand zueinander stehende Lagerbolzen 15 angeordnet. Die Stirnenden der Lagerbolzen 15 sind mit Gewindebohrungen versehen, um sie mittels Schrauben mit den Ringflanschen 14, 15 zu verschrauben. Auf dem oberen, den Kreismessern 9, 10 abgewandten Bereich jedes Lagerbolzens 15 ist eine Lagerplatte 16 frei drehbar gelagert. Diese Lagerplatte 16 ist an der äußeren, dem zylindrischen Gehäuse 8 abgewandten Seite mit einer quer zum Lagerbolzen 15 stehenden Bohrung versehen, in die der Zinken 12 schließend eingesetzt und mittels eines Stiftes 17 gesichert ist. Im dargestellten Ausführungsbeispiel ist auf den Lagerbolzen 15 direkt unterhalb, d.h. an der den Kreismessern 9, 10 zugewandten Seite eine Steuerscheibe 18 drehfest aufgesetzt. Die Steuerscheibe 18 ist mit einer Bohrung in Form einer Innenverzahnung 19 versehen. Der zugehörige Bereich des Lagerbolzens 15 ist als entsprechende Gegenverzahnung 20 ausgebildet, so daß die Steuerscheibe 18 in axialer Richtung des Lagerbolzens 15 verschiebbar ist. Der untere, den Kreismessern 9, 10 zugewandte Bereich des Lagerbolzens 15 ist im Durchmesser größer als der den Zinken 12 aufnehmende Bereich. Der untere Bereich wird von einem Kraftspeicher umgeben, im dargestellten Ausführungsbeispiel in Form eines Tellerfederpaketes 21. Dieses Tellerfederpaket 21 stützt sich mit einem Stirnende an dem Ringflansch 14 und mit dem anderen Ende an der Steuerscheibe 18 ab. An der Lagerplatte 16 sind zwei um einen Winkel von 180° zueinander versetzte Bolzen 22, 23 eingesetzt, die quer zum Lagerbolzen 15 stehen und gegenüber der Außenfläche der Lagerplatte 16 vorstehen. Auf den vorstehenden Bereich sind zwei Wälzlager 24, 25 aufgesetzt, die sich auf der Steuerfläche der Steuerscheibe 18 abwälzen. Die Steuerfläche der Steuerscheibe 18 besteht aus vier Schrägflächen, die wechselweise in Umfangsrichtung ansteigen und abfallen, wobei die Neigungswinkel gleich sind. Demzufolge hat die Steuerfläche der Steuerscheibe 18 zwei tiefe und zwei erhöhte Bereiche, die jeweils um 180° zueinander versetzt sind, so daß ein tiefer Bereich zum höheren Bereich um einen Winkel von 90° versetzt ist. Das zylindrische Gehäuse 8 ist mit einem Kettenrad 26 verschraubt, welches an der dem Tellerfederpaket 21 abgewandten Seite liegt. Das Kettenrad 26 und somit das zylindrische Gehäuse 8 wird mittels einer nicht dargestellten Rollenkette von einem weiteren Kettenrad 27 angetrieben, welches von einem Winkelgetriebe 28 angetrieben wird. Insbesondere die Figuren 1 und 3 zeigen, daß die Drehachsen der Kreismesser 9, 10 zu den Drehachsen der zylindrischen Gehäuse 8 einen spitzen Winkel einschließen, derart, daß die Umlaufbahn der Zinken 12 stärker gegen die Vertikale geneigt ist als die der Kreismesser 9, 10. Aus der Figur 4 ergibt sich, daß die Steuerscheibe 18 und das Tellerfederpaket 21 auch an der gegenüberliegenden Seite jedes Zinkens 12 liegen könnten. Die Figur 4 zeigt, daß das drehbare Gehäuse 8 mittels Wälzlager gegenüber festen Bauteilen des Feldhäckslers gelagert ist. Die Figuren 1 und 2 zeigen, daß der vordere Teil 1 des Feldhäckslers mit einem Vorsatzgerät 29 ausgerüstet ist, welches einen Niederhalter 30 aufweist um die abzuschneidenden Stengel in einem relativ großen Abstand zum Fuß nach vorn zu drücken, so daß der Transport mit dem abgeschnittenen Ende voran begünstigt wird. Die Figur 2 zeigt, daß der Niederhalter 30 bogenförmig ausgebildet ist, so daß die abgeschnittenen Teile der Stengel 11 zur Mitte gelangen. Mittig zwischen und direkt oberhalb der Kreismesser 9, 10 ist der vordere Teil 1 noch mit einem Trennkeil 31 ausgestattet. Die Figur 3 zeigt, daß jedes Kreismesser 9, 10 mittels einer Welle 32 angetrieben, die durch ein feststehendes Rohr 33 geführt ist, welches schräg zur Drehachse des zylindrischen Gehäuses 8 steht. Zur Lagerung dieses zylindrischen Gehäuses 8 ist auf das Rohr 33 eine zylindrische Scheibe 34 fest aufgesetzt, die jedoch entsprechend der Schrägstellung eine schräg stehende Bohrung aufweist. Die von dem Tellerfederpaket 21 aufgebrachte Druckkraft wird an der gegenüberliegenden Seite durch ein Axiallager 35 abgetragen, welches zwischen der Lagerplatte 16 und dem oberen Ringflansch 13 liegt. Die Figur 5 zeigt noch die Innenverzahnung 19 der Steuerkurve 18 und daß die Steuerfläche 36 Ringflächen sind die die Außenverzahnung 19 umgibt. Ferner zeigt diese Figur, daß der untere Ringflansch 14 aus mehreren Segmenten 37 zusammengesetzt ist, die einerseits durch Verbindungslaschen 38 miteinander lösbar verbunden und andererseits mit dem Gehäuse 8 verschraubt sind. Dadurch wird ermöglicht, daß durch Herausnahme eines Segmentes 37 der Kraftspeicher 21 zugänglich wird, um ihn beispielsweise gegen einen mit einer anderen Federkennlinie auszutauschen oder um ihn durch Hinzufügen von Distanzscheiben stärker zu spannen oder das Entfernen von Distanzringen zu entspannen.

Die Erfindung ist nicht auf das dargestellte Ausführungsbeispiel und den Verwendungszweck z.Beispiel Feldhäckslern beschränkt. Wesentlich ist die drehbare Anordnung der Zinken 12 gegenüber dem zylindrischen Gehäuse 8, wobei die beiden Drehachsen parallel und im Abstand zueinander liegen. Wesentlich ist ferner, daß beim Verdrehen eines Zinkens 12 die Steuerkurve 18 mit zunehmendem Schwenkwinkel eine Erhöhung des Drehmomentes bewirkt.

## Patentansprüche

1. Fördereinrichtung in einer Erntemaschine, insbesondere Stengel aufweisenden Erntegütern, mit rotierend antreibbaren zylindrischen Gehäusen, die wenigstens ein Aufnahmeelement zur Festlegung eines radial abweisenden Förderzinken aufweisen,
**dadurch gekennzeichnet,**
**daß** jeder Zinken (12) an seinen inneren, dem zylindrischen Gehäuse (8) zugewandten Ende eine Lagerplatte (16) trägt, die auf einem an dem zylindrischen Gehäuse (8) achsparallelen und gegenüber dem zylindrischen Gehäuse (8) feststehenden Lagerbolzen (15) drehbar gelagert ist, daß an der der Lagerplatte (16) wenigstens ein Wälzkörper (24, 25) oder ein Gleiter angeordnet ist, der sich auf einer durch einen Kraftspeicher (21) belasteten Steuerscheibe (18) abstützt, die gegenüber dem Lagerbolzen (15) unverdrehbar und ausschließlich in axialer Richtung verfahrbar ist, so daß bei einer Drehung des Zinkens (12) die Steuerscheibe (18) entgegen der Wirkung des Kraftspeichers (21) in Achsrichtung des Lagerbolzens (15) verschiebbar ist.

2. Fördereinrichtung nach Anspruch 1,
**dadurch gekennzeichnet,**
**daß** an der Lagerplatte (16) zwei um einen Winkel von 180° zueinander versetzte Wälzkörper, vorzugsweise Kurvenrollen oder Wälzlager (24, 25) drehbar gelagert sind, und daß die die Wälzlager (24, 25) kontaktierende Steuerfläche (36) der Steuerscheibe (18) aus vier sich über einen gleichen Winkelbereich erstreckende Schrägflächen gebildet ist.

3. Fördereinrichtung nach Anspruch 2,
**dadurch gekennzeichnet,**
**daß** die Schrägflächen, in Umlaufrichtung der Steuerfläche (36) gesehen, wechselweise Steigungs- und Neigungsfläche mit gleichen Neigungs- und Steigungswinkeln sind.

4. Fördereinrichtung nach einem oder mehreren der vorhergehenden Ansprüche 1 bis 3,
**dadurch gekennzeichnet,**
**daß** die Druckkraft des Kraftspeichers (21) einstellbar ist.

5. Fördereinrichtung nach einem oder mehreren der vorhergehenden Ansprüche 1 bis 4,
**dadurch gekennzeichnet,**
**daß** der jedem Zinken (12) funktionell zugeordnete Kraftspeicher ein Paket aus Tellerfedern (21) ist.

6. Fördereinrichtung nach einem oder mehreren der vorhergehenden Ansprüche 1 bis 5,
**dadurch gekennzeichnet,**
**daß** die Einstellung der Druckkraft durch Steuerscheiben (18) mit unterschiedlichen Neigungs- und Steigungswinkeln der Schrägfläche der Steuerfläche (36) und/oder durch die Anzahl von Distanzringen einstellbar ist.

7. Fördereinrichtung nach einem oder mehreren der vorhergehenden Ansprüche 1 bis 6,
**dadurch gekennzeichnet,**
**daß** jeder Lagerbolzen (15) zwischen zwei parallel und im Abstand am rotierend antreibbaren Gehäuse (8) befestigten Ringflansche (13, 14) angeordnet ist, und daß der gegenüber den Lagerplatten (16) vorstehende Bereich des Lagerbolzens (15) eine Aufnahme für den Kraftspeicher (21) bildet.

8. Fördereinrichtung nach einem oder mehreren der vorhergehenden Ansprüche 1 bis 7,
**dadurch gekennzeichnet,**
**daß** der zwischen dem Kraftspeicher (21) und der Lagerplatte (16) liegende Bereich des Lagerbolzens (15) als Sitz für die Steuerscheibe (18) derart ausgebildet ist, daß diese drehfest jedoch in axialer Richtung verschiebbar ist.

9. Fördereinrichtung nach Anspruch 8,
**dadurch gekennzeichnet,**
**daß** die Bohrung der Steuerscheibe (18) als Innenverzahnung (19) gestaltet ist, und daß der Lagerbolzen (15) eine entsprechende Gegenverzahnung (20) aufweist.

10. Fördereinrichtung nach einem oder mehreren der vorhergehenden Ansprüche 1 bis 9,
**dadurch gekennzeichnet,**
**daß** die Wälzkörper (24, 25) auf quer zur Längsrichtung des Lagerbolzens (15) stehenden Bolzen (22, 23) drehbar gelagert sind und die in die Lagerplatte (16) eingesetzt sind.

11. Fördereinrichtung nach einem oder mehreren der vorhergehenden Ansprüche 1 bis 10,
**dadurch gekennzeichnet,**
**daß** zur Abtragung der vom Kraftspeicher (21) aufgebrachten Druckkraft an der dem Kraftspeicher (21) gegenüberliegenden Seite ein Axiallager (35) vorgesehen ist, auf das sich die Lagerplatte (16) abstützt.

## Claims

1. A conveyor apparatus in a harvester for harvesting in particular crop materials having stalks, comprising rotatably drivable cylindrical housings which have at least one receiving element for fixing a radially outwardly facing conveyor prong, **characterised in that** at its inner end towards the cylindrical housing (8) each prong (12) carries a mounting plate (16) which is rotatably mounted on a mounting pin (15) which is in parallel-axis relationship on the cylindrical housing (8) and which is stationary with respect to the cylindrical housing (8), that arranged at the mounting plate (16) is at least one rolling body (24, 25) or a slider which is supported on a control disc (18) which is loaded by a force-storage means (21) and which is non-rotatable with respect to the mounting pin (15) and is displaceable exclusively in the axial direction so that, upon rotation of the prong (12), the control disc (18) is displaceable against the action of the force-storage means (21) in the axial direction of the mounting pin (15).

2. A conveyor apparatus according to claim 1 **characterised in that** mounted rotatably on the mounting plate (16) are two rolling bodies, preferably cam rollers, or rolling bearings (24, 25), which are displaced relative to each other through an angle of 180°, and the control surface (36) of the control disc (18), which contacts the rolling bearings (24, 25), is formed from four inclined surfaces which extend over an equal angular range.

3. A conveyor apparatus according to claim 2 **characterised in that** the inclined surfaces, seen in the peripheral direction of the control surface (36), are alternately rise and fall surfaces with equal fall and rise angles.

4. A conveyor apparatus according to one or more of preceding claims 1 to 3 **characterised in that** the pressure force of the force-storage means (21) is adjustable.

5. A conveyor apparatus according to one or more of preceding claims 1 to 4 **characterised in that** the force-storage means functionally associated with each prong (12) is a pack of diaphragm springs (21).

6. A conveyor apparatus according to one or more of preceding claims 1 to 5 **characterised In that** adjustment of the pressure force is adjustable by control discs (18) with different fall and rise angles of the inclined surface of the control surface (36) and/or by the number of spacer rings.

7. A conveyor apparatus according to one or more of preceding claims 1 to 6 **characterised in that** each mounting pin (15) is arranged between two annular flanges (13, 14) which are fixed parallel and at a spacing on the rotatably drivable housing (8) and that the region of the mounting pin (15), which projects with respect to the mounting plates (16), forms a receiving means for the force-storage means (21).

8. A conveyor apparatus according to one or more of preceding claims 1 to 7 **characterised in that** the region of the mounting pin (15), which is between the force-storage means (21) and the mounting plate (16), is in the form of a seat for the control disc (18), in such a way that it is non-rotatable but displaceable in the axial direction.

9. A conveyor apparatus according to claim 8 **characterised in that** the bore in the control disc (18) is in the form of an internal spline (19) and that the mounting pin (15) has a corresponding counterpart spline (20).

10. A conveyor apparatus according to one or more of preceding claims 1 to 9 **characterised in that** the rolling bodies (24, 25) are mounted on pins (22, 23) disposed transversely with respect to the longitudinal direction of the mounting pin (15), and inserted into the mounting plate (16).

11. A conveyor apparatus according to one or more of preceding claims 1 to 10 **characterised in that** to carry the pressure force applied by the force-storage means (21) provided at the side in opposite relationship to the force-storage means (21) is a thrust bearing (35) against which the mounting plate (16) is supported.

## Revendications

1. Dispositif convoyeur pour une machine de récolte, en particulier pour des produits de récolte à tiges, comportant des corps cylindriques entraînés en rotation qui présentent au moins un élément de montage pour la fixation d'une dent d'amenée orientée dans la direction radiale, **caractérisé en ce que** chaque dent (12), à son extrémité intérieure tournée vers le corps (8) cylindrique, présente une plaque formant palier (16), qui est montée tournante sur un axe de palier (15) parallèle à l'axe du corps (8) cylindrique, fixe par rapport audit corps (8) cylindrique, **en ce que** sur la plaque formant palier (16) est disposé au moins un corps roulant (24, 25) ou un patin, qui prend appui sur un disque de commande (18) précontraint par un accumulateur de force (21), lequel disque de commande est fixe en rotation par rapport à l'axe de palier (15) et ne peut se déplacer que dans la direction axiale, de sorte que lors d'une rotation de la dent (12), le disque de commande (18) se déplace dans la direction de l'axe de palier (15), à l'encontre de la force de l'accumulateur de force (21).

2. Dispositif convoyeur selon la revendication 1, **caractérisé en ce que** deux corps roulants mutuellement décalés d'un angle de 180°, de préférence des galets ou des roulements (24, 25), sont montés tournants sur la plaque formant palier (16) et **en ce que** la surface de commande (36) du disque de commande (18) en contact avec les roulements (24, 25) est formée de quatre surfaces inclinées qui s'étendent sur des zones angulaires égales.

3. Dispositif convoyeur selon la revendication 2, **caractérisé en ce que** les surfaces inclinées, vu dans la direction de rotation de la surface de commande (36), sont alternativement des surfaces montantes et des surfaces descendantes avec des angles de pente montante et de pente descendante identiques.

4. Dispositif convoyeur selon une ou plusieurs des revendications 1 à 3, **caractérisé en ce que** la force de pression de l'accumulateur de force (21) est réglable.

5. Dispositif convoyeur selon une ou plusieurs des revendications 1 à 4, **caractérisé en ce que** l'accumulateur de force associé sur le plan fonctionnel à chaque dent (12) est un paquet de rondelles ressorts (21).

6. Dispositif convoyeur selon une ou plusieurs des revendications 1 à 5, **caractérisé en ce que** la force de pression des disques de commande (18) peut être réglée par le biais d'angles d'inclinaison différents et de la pente de la surface inclinée de la surface de commande (36) et/ou par le biais du nombre de bagues entretoises.

7. Dispositif convoyeur selon une ou plusieurs des revendications 1 à 6, **caractérisé en ce que** chaque axe de palier (15) est monté entre deux brides annulaires (13, 14) fixées parallèlement, en étant espacées l'une de l'autre, au corps (8) entraîné en rotation et **en ce que** la partie de l'axe de palier (15) dépassant par rapport aux plaques formant palier (16) forme un moyen de réception pour l'accumulateur de force (21).

8. Dispositif convoyeur selon une ou plusieurs des revendications 1 à 7, **caractérisé en ce que** la partie de l'axe de palier (15) entre l'accumulateur de force (21) et la plaque formant palier (16), en tant que siège pour le disque de commande (18), est agencée de telle sorte que celui-ci soit immobilisé en rotation, mais puisse coulisser dans la direction axiale.

9. . Dispositif convoyeur selon la revendication 8, **caractérisé en ce que** le trou du disque de commande (18) est conformé en denture intérieure (19) et **en ce que** l'axe (15) présente une denture (20) conjuguée adaptée.

10. Dispositif convoyeur selon une ou plusieurs des revendications 1 à 9, **caractérisé en ce que** les corps roulants (24, 25) sont montés tournants sur des axes (22, 23) qui sont disposés transversalement à la direction longitudinale de l'axe (15) et sont intégrés dans la plaque formant palier (16).

11. Dispositif convoyeur selon une ou plusieurs des revendications 1 à 10, **caractérisé en ce que**, pour supporter la force de pression appliquée par l'accumulateur de force (21), il est prévu du côté opposé à l'accumulateur de force (21), une butée axiale (35) sur laquelle la plaque formant palier (16) prend appui.
